# EUROPÄISCHE PATENTSCHRIFT

(11) **EP 2 361 234 B1**
(45) Veröffentlichungstag und Bekanntmachung des Hinweises auf die Patenterteilung: **04.12.2013**
(21) Anmeldenummer: 09748288.9
(22) Anmeldetag: 23.10.2009
(51) Int. Cl.: C04B 24/26, C04B 28/02, E21D 11/10

(54) **VERFAHREN ZUR APPLIKATION VON POLYMERMODIFIZIERTEN NASSBETONMISCHUNGEN**
METHODS FOR APPLYING POLYMER-MODIFIED WET CONCRETE MIXTURES
PROCÉDÉ D'APPLICATION DE MÉLANGES DE BÉTON HUMIDE MODIFIÉS PAR DES POLYMÈRES

(30) Priorität: 06.11.2008 DE 102008043516
(43) Veröffentlichungstag der Anmeldung: 31.08.2011
(73) Patentinhaber: Wacker Chemie AG, 81737 München (DE)
(72) Erfinder: BONIN, Klaus, 84489 Burghausen (DE); BEZLER, Jürgen, 84489 Burghausen (DE)
(74) Vertreter: Schuderer, Michael
(86) Internationale Anmeldenummer: PCT/EP2009/063972
(87) Internationale Veröffentlichungsnummer: WO 2010/052136

(56) Entgegenhaltungen:
- EP-A2- 0 352 585
- WO-A1-02/083593
- CA-A1- 2 269 513
- DE-A1- 19 723 474
- DE-A1-102007 024 964
- DE-B- 1 099 925
- JP-A- 2000 302 509
- CHEMICAL ABSTRACTS, Bd. 117, Nr. 12, 21. September 1992 (1992-09-21), Columbus, Ohio, US; abstract no.: 117218c, T.Mihara: "Spray materials for concrete repair and repair of concrete with the spray materials" Seite 353 XP002576466 -& JP 04 149052 A (DENKI KAGAKU KOGYO KK) 22. Mai 1992 (1992-05-22)

## Beschreibung

Die Erfindung betrifft Verfahren zur Applikation von polymermodifizierten Nassbetonmischungen nach Nassspritzbetonverfahren sowie Verwendung des Verfahrens beispielsweise für die Herstellung von Konstruktionsbauten, insbesondere im Bereich Minenbau oder Tunnelbau.

Gängige Verfahren zum Verarbeiten und Applizieren von Betonmischungen sind Spritzbetonverfahren. Dabei werden Betonmischungen in eine Betonspritzmaschine gegeben, mit der die Betonmischungen über eine Förderleitung mittels einer Spritzdüse auf den jeweiligen Untergrund aufgetragen werden. Betonmischungen enthalten Zement, Füllstoffe, wie Sand oder Kies, und gegebenenfalls weitere Additive.

Bekannt sind hierbei Trockenspritzbetonverfahren und Nassspritzbetonverfahren. Bei Trockenspritzbetonverfahren werden Betonmischungen in trockener Form (Betontrockenmischungen) eingesetzt. Das Anmachen der Betontrockenmischungen erfolgt durch Zugabe von Wasser in der Spritzdüse. Die so erhaltenen Betonmassen werden beim Trockenspritzbetonverfahren also unmittelbar nach dem Anmachen mit Wasser auf einen Untergrund gespritzt. Ein Additiv für Betonmischungen sind beispielsweise Polymere, die in der Betontrockenmischung enthalten sein können oder auch erst in der Spritzdüse zugesetzt werden können. Die JP-A 61097152 und die JP-A 60152778 offenbaren, dass durch Einsatz von Vinylacetat-Ethylen-Vinylchlorid-Terpolymeren in den unterschiedlichen Trockenspritzbetonverfahren der Rückprall beim Auftragen von Betonmischungen auf einen Untergrund reduziert wird. Zur Reduktion der Staubentwicklung bei der Durchführung des Trockenspritzbetonverfahrens und der damit verbundenen Gesundheitsbelastung für Arbeiter auf der Baustelle empfiehlt die JP-A 09-255387 den Einsatz von Polymeren, wie Vinylacetat-Ethylen-Copolymere, in Betonmischungen. Die JP-A 63-270334 und die JP-A 63-002847 schlagen für diesen Zweck Vinylacetat-Ethylen-Copolymere vor, die zusätzlich Einheiten ethylenisch ungesättigter Carbonsäuren enthalten.

Bei Nassspritzbetonverfahren werden Betonmischungen in wässriger Form (Nassbetonmischungen) in die Betonspritzmaschine gegeben. Hier werden die Betonmischungen also zuerst mit Wasser angemacht und dann in die Betonspritzmaschine gegeben, mit der die Nassbetonmischungen über eine Förderleitung mit einer Spritzdüse auf einen Untergrund aufgetragen werden. Bei Einsatz des Nassspritzbetonverfahrens für den Konstruktionsbau wurden Polymerisate bisher in der Spritzdüse zugesetzt.

Die JP-A 11-107506 beschreibt Nassspritzbetonverfahren, bei denen Vinylacetat-Ethylen-Acrylsäureester-Terpolymere in der Spritzdüse zugesetzt werden, um den Rückprall des Nassspritzbetons beim Aufprall auf den Untergrund zu verringern. Die DE-A 102007024965 und die DE-A 102007024964 beschreiben polymermodifizierte Abbindebeschleuniger und deren Einsatz in Nassspritzbetonverfahren, wobei die polymermodifizierten Abbindebeschleuniger den Nassbetonmischungen in der Spritzdüse beigemischt werden. Die JP-A 2004-051422 offenbart den Einsatz von Reparatur-Betonmischungen, die nach Nass-spritzbetonverfahren appliziert werden und neben superfeinem γ-Ca₂SiO₄ als Additiv Vinylacetat-Ethylen-Copolymere enthalten. Die Reparatur-Betonmischungen wurden dabei nach dem Nassspritzbetonverfahren und anschließender Bearbeitung per Hand mit Auftragsdicken von bis zu 2 cm zur Sanierung von Beton eingesetzt. Betonzusammensetzungen enthaltend Polyacrylamide mit anionischen Comonomer-Einheiten sind aus der EP-A 1726432 zur Herstellung von Brandschutzbeschichtungen bekannt. Die DE-A 19723474 beschreibt Trocken- wie Nassbetonmischungen mit Emulgator-stabilisierten Styrol-Acrylsäureester-Copolymerisaten, die anionisch geladene Monomer-Einheiten enthalten. Derartige Copolymerisate sind allerdings in Nassbetonmischungen nicht stabil, worunter die Lagerstabilität und damit die Transportstabilität sowie die anwendungstechnischen Eigenschaften der Nassbetonmischungen leiden. Des Weiteren wirken die anionischen Copolymerisate in Folge ihrer negativen Ladung auch als Verflüssiger in Nassbetonmischungen. In der Praxis ist es jedoch von Vorteil, Verflüssiger und weitere Additive unabhängig voneinander dosieren zu können, um zu jedem Bauabschnitt der jeweiligen Baustelle die gerade gewünschten Betoneigenschaften einstellen zu können. Auch Emulgatoren können verflüssigend wirken. Der Festbeton der DE-A 19723474 verfügt über erhöhte Elastizitätsmodule (E-Module) und damit verbunden über eine geringere Elastizität, was zu einer Rissbildung des Festbetons beitragen kann.

Die bisher bekannten Betonmischungen und deren Applikation nach Spritzbetonverfahren führen zu Festbeton, der hinsichtlich seiner Wasserundurchlässigkeit nicht ausreichend ist. Festbeton wird durch Abbinden von Nassbetonmischungen erhalten. Gerade im Konstruktionsbau, wie beispielsweise im Tunnel- oder Minenbau, werden besonders hohe Anforderungen an Festbeton gestellt. Denn hier wird der Festbeton ständig mit beispielsweise Gebirgs- oder Grundwasser kontaktiert, das sich zudem in seiner Zusammensetzung, wie seines Salzgehaltes, je nach Jahrszeit und den lokalen Begebenheiten stark ändert, und dessen Eindringen in den Festbeton diesen stark schädigt.

Vor diesem Hintergrund bestand die Aufgabe, Festbeton bereit zu stellen, der sich durch eine höhere Wasserundurchlässigkeit auszeichnet und der auch die Weiteren vorgenannten Probleme überwindet.

Die erfindungsgemäße Aufgabe wurde überraschenderweise dadurch gelöst, dass polymermodifizierte Nassbetonmischungen in Betonspritzmaschinen gegeben wurden und nach dem Nassspritzbetonverfahren mit Auftragsdicken von ≥ 3 cm appliziert wurden. Die Polymerisate werden den Nassbetonmischungen erfindungsgemäß also nicht erst in der Spritzdüse zugegeben.

Gegenstand der Erfindung sind Verfahren zur Applikation von Nassbetonmischungen enthaltend Zement, Füllstoffe, Wasser, ein oder mehrere Polymerisate sowie gegebenenfalls weitere Zusatzmittel oder Additive nach dem Nassspritzbetonverfahren, dadurch gekennzeichnet, dass die Nassbetonmischungen 9 bis 30 Gew.-% Zement, 65 bis 90 Gew.-% Füllstoffe, 0,1 bis 5,0 Gew.-% an einem oder mehreren Polymerisaten, wobei sich die vorigen Angaben in Gew.-% jeweils auf 100 Gew.-% Trockenmasse der Nassbetonmischungen beziehen, und 40 bis 60 Gew.-%, bezogen auf die Gesamtmasse des eingesetzten Zements, Wasser enthalten, und
als Polymerisat mindestens ein Vinylacetat-Homopolymerisat, ein Mischpolymerisat von Vinylacetat mit Ethylen, ein Mischpolymerisat von Vinylacetat mit Ethylen und einem oder mehreren weiteren Vinylestern, ein Mischpolymerisat von Vinylacetat mit Ethylen und Acrylsäureester oder ein Mischpolymerisat von Vinylacetat mit Ethylen und Vinylchlorid eingesetzt wird, und
die Nassbetonmischungen in eine Betonspritzmaschine gegeben und mittels Nassspritzbetonverfahren mit einer Schichtdicke von ≥ 3 cm auf einen Untergrund aufgetragen werden.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9^{®} oder VeoVa10^{®} (Handelsnamen der Firma Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Ethylenisch ungesättigte, anionische Monomere werden zur Herstellung der Polymerisate vorzugsweise zu ≤ 5 Gew.-%, besonders bevorzugt zu ≤ 1 Gew.-% und am meisten bevorzugt zu ≤ 0,1 Gew.-% eingesetzt, wobei sich die Angaben in Gew.-% jeweils auf die Gesamtmasse der Monomere zur Herstellung der Polymerisate beziehen. Anionische Monomere sind solche, die in destilliertem Wasser zumindest anteilig als negativ geladene, ethylenisch ungesättigte Verbindungen vorliegen, wie beispielsweise ethylenisch ungesättigte Carbonsäuren oder Sulfonsäuren. Ethylenisch ungesättigte, kationische Monomere werden vorzugsweise zu ≤ 5 Gew.-%, besonders bevorzugt zur ≤ 1 Gew.-% und am meisten bevorzugt zu ≤ 0,1 Gew.-% eingesetzt, wobei sich die Angaben in Gew.-% jeweils auf die Gesamtmasse der Monomere zur Herstellung der Polymerisate beziehen. Kationische Monomere sind solche, die in destilliertem Wasser zumindest anteilig als positiv geladene, ethylenisch ungesättigte Verbindungen vorliegen, wie beispielsweise ethylenisch ungesättigte Amine.

Als Polymerisat geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester sowie Mischpolymerisate von Vinylacetat mit Ethylen und Vinylchlorid.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest, wie Vinylpropionat, Vinyldodecanoat, Vinylester von alpha-verzweigten Carbonsäuren mit 9 bis 13 C-Atomen wie VeoVa9^{®}, VeoVa10^{®}, VeoVa11^{®}; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei sich die Angaben in Gew.-% auf jeweils 100 Gew.-% aufaddieren.

Besonders bevorzugt werden Vinylacetat-Homopolymerisate; Mischpolymerisate von Vinylacetat mit 1 bis 40 Gew.-% Ethylen und gegebenenfalls 1 bis 50 Gew.-% von einem oder mehreren weiteren Comonomeren aus der Gruppe Vinylester mit 1 bis 15 C-Atomen im Carbonsäurerest, wie Vinylpropionat, Vinyldodecanoat, Vinylester von alpha-verzweigten Carbonsäuren mit 9 bis 13 C-Atomen wie VeoVa9^{®}, VeoVa10^{®}, VeoVa11^{®}.

Die Monomerauswahl bzw. die Auswahl der Gewichtsanteile der Comonomere erfolgt dabei so, dass die Polymerisate im allgemeinen eine Glasübergangstemperatur Tg von -50°C bis +50°C, vorzugsweise -30°C bis +20°C, besonders bevorzugt -20°C bis +5°C und am meisten bevorzugt -15°C bis 0°C aufweisen. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/tg = x1/Tg1 + x2/Tg2 + ... + xn/Tgn, wobei xn für den Massebruch (Gew.-%/1.00) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt. Die Mindesfilmtemperatur MFT der Polymerisate beträgt vorzugsweise -5°C bis +50°c, vorzugsweise 0°C bis +20°C, besonders bevorzugt 0°C bis +10°C und am meisten bevorzugt 0°C bis 5°C.

Die Herstellung der Polymerisate erfolgt in wässrigem Medium und bevorzugt nach dem Emulsionspolymerisationsverfahren - wie beispielsweise in DE-A 102006007282 beschrieben. Die Polymerisate fallen dabei in Form von wässrigen Dispersionen an. Bei der Polymerisation können die gängigen Schutzkolloide und/oder Emulgatoren eingesetzt werden, wie in der DE-A 102006007282 beschrieben. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymerisate in Form von wässrigen Dispersionen können nach gängigen Trocknungsverfahren zu entsprechenden in Wasser redispergierbaren Pulvern überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die Polymerisate liegen vorzugsweise in Form von Schutzkolloidstabilisierten wässrigen Dispersionen oder Schutzkolloidstabilisierten, in Wasser redispergierbaren Pulver vor.

Typische Rezepturen der Nassbetonmischungen enthalten 9 bis 30 Gew.-%, insbesondere 15 bis 25 Gew.-% Zement, wie beispielsweise Portlandzement oder Hochofenzement, bevorzugt Portlandzement CEM I 42,5, Portlandzement CEM I 52,5, Portlandsilicastaubzement CEM II A-D 52,5 oder Hochofenzement CEM III 42,5 A. Polymerisate werden zu 0,1 bis 5,0 Gew.-%, bevorzugt zu 0,2 bis 2,0 Gew.-%, besonders bevorzugt von 0,5 bis 1,5 Gew.-% eingesetzt, jeweils vorzugsweise in Form von wässrigen Dispersion mit einem Feststoffgehalt von 10 bis 75 Gew.-%, besonders bevorzugt von 40 bis 60 Gew.-%. Ein weiterer Bestandteil sind 65 bis 90 Gew.-%, bevorzugt 75 bis 90 Gew.-% Füllstoffe wie Sand oder Kies. Als Additiv werden üblicherweise Abbindebeschleuniger zu 3 bis 10 Ges.-%, bezogen auf den Zementgehalt der wässrigen Betonzusammensetzung, eingesetzt. Vorzugsweise werden wässrige Abbindebeschleuniger eingesetzt, vorzugsweise mit einem Feststoffgehalt von 10 bis 75 Gew.-%, besonders bevorzugt von 30 bis 60 Gew.-% und am meisten bevorzugt von 40 bis 60 Gew.-%. Soweit nicht anders angegeben beziehen sich die Angaben in Gew.-% jeweils auf 100 Gew.-% Trockenmasse der Rezeptur. Zur Herstellung der Nassbetonmischungen werden 40 bis 60 Gew.-% und vorzugt 40 bis 50 Gew.-% Wasser, bezogen auf die Gesamtmasse des eingesetzten Zements, eingesetzt.

Es können die gängigen Abbindebeschleuniger eingesetzt werden, wie beispielsweise die Aluminiumverbindungen, Silikate, Alkalihydroxide oder Carbonate. Bevorzugte Abbindebeschleuniger sind Aluminiumsalze, Aluminate, Alkalisilikate, wie beispielsweise Wasserglas, Alkalicarbonate oder Kaliumhydroxid. Besonders bevorzugte Abbindebeschleuniger sind Aluminiumsulfat, Alkalialuminate wie Kaliumaluminat, Aluminiumhydroxide, Kaliumcarbonat oder Sulfoaluminate wie beispielsweise Calciumsulfoaluminat.

Die anwendungstechnischen Eigenschaften der Nassbetonmischungen können durch weitere Zusatzmittel verbessert werden. In bevorzugten Ausführungsformen der wässrigen Betonzusammensetzungen enthaltene Zusatzmittel sind beispielsweise 0,2 bis 2 Gew.-%, bevorzugt 0,2 bis 1,5 Gew.-% und besonders bevorzugt 0,4 bis 1,0 Gew.-%, bezogen auf Zement, Betonverflüssiger (dem Fachmann auch bekannt als Fließmittel), oder Pigmente, Schaumstabilisatoren, Hydrophobierungsmittel, Weichmacher, Flugasche, disperse Kieselsäure, Luftporenmittel zur Steuerung der Betonrohdichte oder Pumpenhilfsmittel zur Verbesserung der Pumpbarkeit. Des Weiteren können den wässrigen Betonzusammensetzungen gegebenenfalls Additive zugesetzt werden, die den abbindebeschleunigenden Effekt der Abbindebeschleuniger auf die Nassbetonmischungen modulieren, wie beispielsweise Phosphorsäure, Phosphonsäuren, Polyphosphat, Polyhydroxycarbonsäure oder organische Additive, insbesondere Polyacrylsäure, Hexamethylentetraamin, Alkanolamine wie beispielsweise Diethanolamin (DEA) oder Triethanolamin.

Die Herstellung der Nassbetonmischungen aus den einzelnen Bestandteilen der Rezeptur ist an keine besondere Vorgehensweise oder Mischvorrichtung gebunden. Das Mischen kann beispielsweise in einem Betonmischer oder einem Fertigbetonmischwerk erfolgen.

Der Einsatz der Polymerisate wirkt sich auf eine Reihe von Eigenschaften der Nassbetonmischungen vorteilhaft aus. So sind die Nassbetonmischungen selbst bei den oben angegebenen, sehr niedrigen Wasser-Gehalten nach dem erfindungsgemäßen Verfahren sehr gut pumpbar, Nassbetonmischungen mit geringeren Wasser-Gehalten führen nach Abbinden zu Produkten mit höherer Festigkeit. Des Weiteren führt der Einsatz der Polymerisate nach dem erfindungsgemäßen Verfahren zu einer Erhöhung des Verlaufs der Nassbetonmischungen, so dass der Zusatz von Betonverflüssigern bzw. Fließmitteln reduziert werden kann.

Zum Applizieren der Nassbetonmischungen auf Untergründe können die für Spritzbetonverfahren bekannten Vorrichtungen wie beispielsweise Spritzroboter oder Spritzmaschinen eingesetzt werden.

Die Auftragsdicke der Nassbetonmischungen nach dem erfindungsgemäßen Verfahren beträgt vorzugsweise 5 bis 40 cm, besonders bevorzugt 5 bis 30 cm und am meisten bevorzugt 11 bis 20 cm.

Vorteilhafterweise tritt bei der Durchführung des erfindungsgemäßen Verfahrens nur ein geringer Rückprall auf im Vergleich zu herkömmlichen Verfahren. Als Rückprall wird die Menge an Beton bezeichnet, die beim Auftragen auf einen Untergrund nicht auf dem Untergrund haften bleibt, sondern abfällt und somit als Abfall entsorgt werden muss. Der Rückprall beträgt bei Durchführung des erfindungsgemäßen Verfahrens vorzugsweise ≤ 45 Gew.-%, besonders bevorzugt 3 bis 45 Gew.-% und am meisten bevorzugt 5 bis 15 Gew.-%, je bezogen auf die insgesamt applizierte Menge an Nassbetonmischung. Die angegebenen Werte gelten auch bei über Kopf Anwendungen des Verfahrens.

Das erfindungsgemäße Verfahren kann in sämtlichen Anwendungen von Spritzbetonverfahren Anwendung finden umfassend den Konstruktionsbau, die Oberflächenversiegelung, die Befestigung von Böschungen oder die Sicherung von Fels oder Gestein. Es sind somit die gängigen Betonbauwerke nach dem erfindungsgemäßen Verfahren erhältlich.

Der Konstruktionsbau umfasst Gebäude, Schächte, Versorgungswege, Brücken, Bodenplatten oder vorzugsweise Tunnel oder Minen.

Nach dem erfindungsgemäßen Verfahren können auch Betonverbunde hergestellt werden, indem eine oder mehrere Schichten der Nassbetonmischungen übereinander aufgetragen werden, wobei gegebenenfalls zwischen oder in den Schichten Bauelemente eingebaut werden können.

Geeignete Bauelemente sind beispielsweise Stahl, wasserundurchlässige Folien, vorzugsweise PE- oder PVC-haltige Folien, oder wasserundurchlässige Membrane. Wasserundurchlässige Membrane enthalten Polymere und zementäre Komponenten und sind dem Fachmann auch unter dem Begriff TSL (thin sprayable liner) bekannt.

Zur Herstellung des Betonverbundes werden die Nassbetonmischungen vorzugsweise direkt auf den gegebenenfalls mit Stahl bewehrten Untergrund aufgetragen werden. Die aufgetragene Schichtdicke beträgt üblicherweise zwischen 10 bis 40 cm. Insbesondere bei der Herstellung von dickeren Betonschichten ist es vorteilhaft, die Nassbetonmischungen in mehreren Auftragsschichten mit jeweils geringerer Betonschichtdicke übereinander aufzutragen. Ebenso bevorzugt kann ein Betonverbund auch hergestellt werden, indem der verbleibende Raum zwischen einem Untergrund und einem vorgefertigten Bauteil mit wässrigen Betonzusammensetzungen verfüllt wird, wobei zur Erhöhung der Stabilität des Verbundes gegebenenfalls Stahlbewehrungen eingebaut werden.

Zur Herstellung eines Betonverbundes können zwischen einem Bauteil und einer Schicht einer Nassbetonmischung oder zwischen zwei Schichten Nassbetonmischungen, die jeweils unabhängig voneinander gegebenenfalls mit Stahl bewährt sind, wasserundurchlässige Folien oder wasserundurchlässige Membrane eingebaut werden.

Nach dem erfindungsgemäßen Verfahren erhältliche Betonbauwerke weisen gegenüber entsprechenden, aus dem Stand der Technik bekannten Betonbauwerke eine höhere Wasserundurchlässigkeit auf und haben zudem eine höhere Festigkeit sowie eine geringere Neigung zur Rissbildung. Des Weiteren sind die erfindungsgemäß hergestellten Betonbauwerke durch eine sehr gute Haftung auch auf kritischen Untergründen, wie nassen Untergründen charakterisiert.

Die Wasserundurchlässigkeit von Festbeton wird nach DIN1048 über die Eindringtiefe von Wasser in den Festbeton charakterisiert. Als Mindestanforderung an Festbeton wird eine maximale Eindringtiefe nach DIN1048 von bis zu 50 mm akzeptiert. Festbeton mit einer geringen Wasserdurchlässigkeit weist nach DIN1048 eine Eindringtiefe von Wasser von 30 mm. Nach dem erfindungsgemäßen Verfahren werden Eindringtiefen von Wasser in den Festbeton von vorzugsweise ≤ 20 mm und besonders bevorzugt von ≤ 15 mm erreicht (bestimmt nach DIN1048).

Im Unterschied zu Trockenspritzbetonverfahren können die erfindungsgemäßen Nassbetonmischungen vor ihrer Applikation auf einen Untergrund auf ihre Betoneigenschaften, wie Wassergehalt, Konsistenz oder Ausbreitmaß, hin geprüft und erforderlichenfalls angepasst werden. Auch die bei Trockenspritzbetonverfahren auftretende Staubentwicklung sowie der bei derartigen Verfahren auftretende erhöhte Rückprall wird erfindungsgemäß vermieden. Die erfindungsgemäß eingesetzten Nassbetonmischungen sind transportstabil. Durch getrennte Zugabe von Verflüssiger und Polymerisate können beispielsweise beliebige geeignete w/z-Werte eingestellt werden.

Die folgenden Beispiele dienen der detaillierten Erläuterung der Erfindung und sind in keiner Weise als Einschränkung zu verstehen.

### Herstellung von Beton-Bohrkernen:

Vergleichsbeispiel 1 (VBsp. 1): Nassspritzbetonverfahren ohne Polymer:

| | |
|---|---|
| 1077 kg | Sand (bis 4,0 mm Korndurchmesser) |
| 823 kg | Kies (4,0 bis 8,0 mm Korndurchmesser) |
| 400 kg | Portlandzement CEM I 52,5 R |
| 20 kg | Flugasche Safament |
| 2,7 kg | Muraplast FK 804.2 (Betonverflüssiger) |
| 0,465 | w/z-Wert (der w/z-Wert steht für den Wasserzementwert und bezeichnet das gewichtsbezogene Verhältnis aus Wasser zu Zement in der jeweiligen Nassbetonmischung) |
| 4,0 kg | Retard 360 (Verzögerer) |

Die vorgenannten Komponenten wurden in einem gängigen Betonmischer mit einem Volumen von 2 m³ durch 2 minütiges Rühren gleichmäßig gemischt.
Die so erhaltene Nassbetonmischung wurde in einen gängigen Spritzroboter gegeben und über eine Spritzdüse in eine Schalung (Länge/Höhe/Breite = 70 cm/40 cm/70 cm) aufgetragen. Währenddessen wurden der Nassbetonmischung über die Spritzdüse insgesamt 40 kg Abbindebeschleuniger Mayco SA 160 gleichmäßig zugegeben.
Nach 24 h Lagerung bei 15°C und einer relativen Luftfeuchtigkeit von 65% wurden aus dem so erhaltenen Festbeton zylindrische Bohrkerne mit einer Grundfläche von 200 mm² und einer Höhe von 100 mm gezogen und entsprechend der Prüfdauer nach DIN EN 196 gelagert. Anschließend wurden die Bohrkerne der anwendungstechnischen Ausprüfung unterzogen.

### Beispiel 2 (Bsp. 2): Nassspritzbetonverfahren mit Polymer:

Im Unterschied zu Vergleichsbeispiel 1 wurden der Nassbetonmischung 1,96 kg Muraplast FK 804.2, 6,0 kg Retard 360 sowie 22 kg eines Polyvinylalkohol-stabilisierten Vinylacetat-Ethylen-Copolymerisats in Form eines Pulvers (Tg von -7°C, MFT von 0°C) zugesetzt. Der w/z-Wert betrug 0,465.

### Beispiel 3 (Bsp. 3): Nassspritzbetonverfahren mit Polymer:

Im Unterschied zu Vergleichsbeispiel 1 wurden der Nassbetonmischung 1,96 kg Muraplast FK 804.2, 4,0 kg Retard 360 sowie 40 kg einer wässrigen Dispersion eines Polyvinylalkohol-stabilisierten Vinylace-tat-Ethylen-Copolymerisats (Feststoffgehalt FG von 53%, Tg von -7°C, MFT von 0°C) zugesetzt. Der w/z-Wert betrug 0,47.

### Beispiel 4 (Bsp. 4): Nassspritzbetonverfahren mit Polymer:

Im Unterschied zu Beispiel 2 wurde der Nassbetonmischung 4,0 kg Retard 360, aber kein Muraplast FK 804.2 (Betonverflüssiger) zugesetzt und der w/z-Wert betrug 0,45.

### Beispiel 5 (Bsp. 5): Nassspritzbetonverfahren mit Polymer:

Im Unterschied zu Beispiel 3 wurden der Nassbetonmischung 1,96 kg Retard 360 zugesetzt und der w/z-Wert betrug 0,45.

Vergleichsbeispiel 6 (VBsp. 6): Trockenspritzbetonverfahren mit Polymer:

| | |
|---|---|
| 1077 kg | Sand (bis 4,0 mm Korndurchmesser) |
| 823 kg | Kies (4,0 bis 8,0 mm Korndurchmesser) |
| 300 kg | Portlandzement CEM I 52,5 R |
| 20 kg | Beschleuniger Aluminiumsulfat (fest) |

Die vorgenannten Komponenten wurden in einem gängigen Trockenmörtelmischer mit einem Volumen von 2 m³ durch 2 minütiges Rühren gleichmäßig gemischt.
Die so erhaltene Trockenbetonmischung wurde in einen gängigen Spritzroboter gegeben und über eine Spritzdüse in eine Schalung (Länge/Höhe/Breite = 70 cm/40 cm/70 cm) aufgetragen. Hierbei wurden über die Spritzdüse insgesamt 40 kg der wässrigen Dispersion eines Polyvinylalkohol-stabilisierten Vinylacetat-Ethylen-Copolymerisats (Feststoffgehalt FG von 53%, Tg von -7°C, MFT von 0°C) gleichmäßig zugegeben.
Wasser wurde auch über die Spritzdüse zugegeben, so dass der w/z-Wert der Betonmischung 0,45 betrug.
Aus dem so erhaltenen Produkt wurden wie in Vergleichsbeispiel 1 beschrieben Bohrkerne gewonnen.

Vergleichsbeispiel 7 (VBsp. 7): Trockenspritzbetonverfahren mit Polymer: Im Unterschied zu Vergleichsbeispiel 6 wurden der Betontrockenmischung 20 kg einer wässrigen Dispersion eines Polyvinylalkohol-stabilisierten Vinylacetat-Ethylen-Copolymerisats (Feststoffgehalt FG von 53%, Tg von -7°C, MFT von 0°C) zugesetzt und über die Spritzdüse wurde keine wässrige Dispersion eines Polyvinylalkohol-stabilisierten Vinylacetat-Ethylen-Copolymerisats (Feststoffgehalt FG von 53%, Tg von -7°C, MFT von 0°C) zugegeben.

### Anwendungstechnische Ausprüfung:

Die Austestung der Bohrkerne der (Vergleichs)Beispiele gemäß DIN 1048-5 ergab, dass die nicht nach dem erfindungsgemäßen Verfahren hergestellten Polymere enthaltenden Bohrkerne der Vergleichsbeispiele 6 und 7 dramatisch wasserdurchlässiger waren als selbst der Bohrkern des Vergleichsbeispiels 1, der kein Polymer enthielt (Tabelle 1). Durch die Bohrkerne der Vergleichsbeispiele 6 und 7 begann das Wasser nach 0,5 Tagen durchzuströmen. In die nach dem erfindungsgemäßen Verfahren hergestellten Bohrkerne (Beispiele 2 - 5) war dagegen bis zum Ende der Austestung gemäß DIN 1048-5 nur in sehr geringfügig Wasser eingedrungen (Tabelle 1).

Die Nassbetonmischungen der Beispiele 2, 3 und 5 wurden mit unterschiedlichen Auftragsstärken, aber unter ansonsten jeweils identischen Bedingungen in einem Naturtunnel auf einen Untergrund aufgetragen (Tabelle 2). Nach 7 Tagen wurde die Anzahl der Durchfeuchtungsstellen für die einzelnen Beispiele optisch bestimmt. Die Durchfeuchtungsstellen äußerten sich durch flächige Wasserflecken an der zum Untergrund des Tunnels abgewandten Seite des Betonauftrags. Aus Tabelle 2 geht hervor, dass die Anzahl der Durchfeuchtungsstellen durch die erfindungsgemäße Vorgehensweise erheblich verringert werden konnte.

**Tabelle 1: Bestimmung der Wasserundurchlässigkeit von Festbeton gemäß DIN 1048-5:**

| | Verfahren | Polymer | Wasserundurchlassigkeit nach DIN 1048-5 [mm] | Dauer der Ausprüfung [Tage] |
|---|---|---|---|---|
| VBsp.1 | Nass | - | 24,9 | 3 |
| Bsp.2 | Nass | Pulver | 11,5 | 3 |
| Bsp.3 | Nass | Dispersion | 13,3 | 3 |
| Bsp.4 | Nass | Pulver | 16,2 | 3 |
| Bsp.5 | Nass | Dispersion | 14,5 | 3 |
| VBsp.6 | Trocken | Dispersion | 31,2 | 0,5^{a)} |
| VBsp.7 | Trocken | Pulver | 34,7 | 0,5^{a)} |

| | | | | |
|---|---|---|---|---|
| a) Der Bohrkern erwies sich als so undicht, dass das Wasser nach 0,5 Tagen durch den Bohrkern hindurchzufließen begann. | | | | |

**Tabelle 2: Wasserdurchlässigkeit von Festbeton in Abhängigkeit der Auftragsstärke des Betons:**

| Anzahl der Durchfeuchtungsstellen je 10 m²: | VBsp.1 | Bsp.2 | Bsp.3 | Bsp.5 |
|---|---|---|---|---|
| 12 bis 13 cm Auftragsstärke | 8-10 | 1-2 | 1-2 | 1-2 |
| ca. 2 cm Auftragsstärke | > 30 | 7-9 | 7-9 | 7-9 |

Die polymermodifizierten Frischbetonmassen der Beispiele 2 - 5 zeigen die gewünschte Lagerstabilität und sind somit transportstabil, was sich am gleichbleibenden Verlauf direkt nach Mischen der Komponenten der Nassbetonmischung und nach einstündige Lagerung äußert (Tabelle 3). Durch Reduzieren des w/z-Werts (Beispiel 4) konnte der Verlauf reduziert werden, ohne die Pumpbarkeit zu beeinträchtigen. Zudem kann durch Reduzieren des w/z-Werts die Frühfestigkeit von Beton verbessert werden (Beispiel 4). Des Weiteren tritt bei Durchführung des erfindungsgemäßen Verfahrens ein geringerer Rückprall auf.

**Tabelle 3: Prüfung der Frischbetoneigenschaften:**

| | VBsp.1 | Bsp. 2 | Bsp. 3 | Bsp. 4 | Bsp. 5 |
|---|---|---|---|---|---|
| w/z-Wert | 0,465 | 0,465 | 0,470 | 0,450 | 0,450 |
| Verlauf^{a)} | 58 cm | 58 cm | 57 cm | 52 cm | 58 cm |
| Verlauf nach 1 h Lagerung^{b)} | 58 cm | 58 cm | 57 cm | 52 cm | 58 cm |
| Rückprall^{c)} | 100 | 50 | 50 | 50 | 50 |
| Druckfestigkeit nach 7 Tagen ([N/mm²])^{d)} | 17,0 | 17,1 | 22,1 | 29,3 | nicht bestimmt |
| Druckfestigkeit nach 28 Tagen ([N/mm²]) ^{d)} | 36,9 | 35,6 | 39,8 | 36,1 | nicht bestimmt |

| | | | | | |
|---|---|---|---|---|---|
| a) Verlauf wurde nach Mischen der einzelnen Komponenten der Nassbetonmischung gemäß DIN 12350 Teil 5 bestimmt. b) Verlauf wurde nach 1 h Lagerung der Nassbetonmischung gemäß DIN 12350 Teil 5 bestimmt. c) Angaben beziehen sich auf das Ergebnis mit Vergleichsbeispiel 1. d) Die Bestimmung der Druckfestigkeit des abgebundenen Betons erfolgte gemäß DIN EN 12504-1. | | | | | |

## Patentansprüche

1. Verfahren zur Applikation von Nassbetonmischungen enthaltend Zement, Füllstoffe, Wasser, ein oder mehrere Polymerisate sowie gegebenenfalls-weitere Zusatzmittel oder Additive nach dem Nassspritzbetonverfahren, **dadurch gekennzeichnet, dass**
die Nassbetonmischungen, 9 bis 30 Gew.-% Zement, 65 bis 90 Gew.-% Füllstoffe, 0,1 bis 5,0 Gew.-% an einem oder mehreren Polymerisaten, wobei sich die vorigen Angaben in Gew.-% jeweils auf 100 Gew.-% Trockenmasse der Nassbetonmischungen beziehen, und 40 bis 60 Gew.-%, bezogen auf die Gesamtmasse des eingesetzten Zements, Wasser enthalten, und
als Polymerisat mindestens ein Vinylacetat-Homopolymerisat, ein Mischpolymerisat von Vinylacetat mit Ethylen, ein Mischpolymerisat von Vinylacetat mit Ethylen und einem oder mehreren weiteren Vinylestern, ein Mischpolymerisat von Vinylacetat mit Ethylen und Acrylsäureester oder ein Mischpolymerisat von Vinylacetat mit Ethylen und Vinylchlorid eingesetzt wird, und
die Nassbetonmischungen in eine Betonspritzmaschine gegeben und mittels Nassspritzbetonverfahren mit einer Schichtdicke von ≥ 3 cm auf einen Untergrund aufgetragen werden.

2. Verfahren zur Applikation von Nassbetonmischungen nach Anspruch 1, **dadurch gekennzeichnet, dass** die Vinylester ausgewählt werden aus der Gruppe umfassend Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen.

3. Verfahren zur Applikation von Nassbetonmischungen nach Anspruch 1 bis 2, **dadurch gekennzeichnet, dass** die Polymerisate Glasübergangstemperaturen Tg von -50°C bis +50°C haben.

4. Verfahren zur Applikation von Nassbetonmischungen nach Anspruch 1 bis 3, **dadurch gekennzeichnet**, als ein Zusatzmittel 0,2 bis 2 Gew.-%, bezogen auf die Gesamtmasse des eingesetzten Zements der Nassbetonmischung, Betonverflüssiger eingesetzt werden.

5. Verfahren zur Applikation von Nassbetonmischungen nach Anspruch 1 bis 4 für die Herstellung von Konstruktionsbauten, die Oberflächenversiegelungen, die Befestigung von Böschungen oder die Sicherung von Fels oder Gestein.

6. Verfahren zur Applikation von Nassbetonmischungen nach Anspruch 1 bis 4 für die Herstellung von Gebäuden, Schächten, Versorgungswegen, Brücken, Bodenplatten, Tunnel oder Minen.

## Claims

1. Method for applying wet concrete mixtures containing cement, fillers, water, one or more polymers and optionally further additional substances or additives by the wet shotcrete method, **characterized in that**
the wet concrete mixtures contain 9 to 30 wt.% of cement, 65 to 90 wt.% of fillers, 0.1 to 5.0 wt.% of one or more polymers, the above amounts in wt.% in each case being based on 100 wt.% of dry weight of the wet concrete mixtures, and 40 to 60 wt.%, based on the total weight of the cement employed, of water; and
at least a vinyl acetate homopolymer, a copolymer of vinyl acetate with ethylene, a copolymer of vinyl acetate with ethylene and one or more further vinyl esters, a copolymer of vinyl acetate with ethylene and an acrylic acid ester or a copolymer of vinyl acetate with ethylene and vinyl chloride is employed as a polymer, and
the wet concrete mixtures are introduced into a concrete spraying machine and applied to a substrate by means of a wet shotcrete method with a layer thickness of 2 ≥ 3 cm.

2. Method for applying wet concrete mixtures according to Claim 1, **characterized in that** the vinyl esters are chosen from the group comprising vinyl acetate, vinyl propionate, vinyl butyrate, vinyl 2-ethylhexanoate, vinyl laurate, 1-methylvinyl acetate, vinyl pivalate and vinyl esters of alpha-branched monocarboxylic acids having 9 to 13 C atoms.

3. Method for applying wet concrete mixtures according to Claims 1 and 2, **characterized in that** the polymers have glass transition temperatures Tg of from -50°C to +50°C.

4. Method for applying wet concrete mixtures according to Claims 1 to 3, **characterized in that** 0.2 to 2 wt.%, based on the total weight of the cement employed in the wet concrete mixture, of concrete plasticizers are employed as an additional substance.

5. Method for applying wet concrete mixtures according to Claims 1 to 4 for the production of construction structures, the sealings of surfaces, the securing of slopes or the anchoring of rock or stone.

6. Method for applying wet concrete mixtures according to Claims 1 to 4 for the production of buildings, shafts, supply routes, bridges, flooring slabs, tunnels or mines.

## Revendications

1. Procédé pour l'application de mélanges de béton humide contenant du ciment, des charges, de l'eau, un ou plusieurs polymérisats ainsi qu'éventuellement d'autres adjuvants ou additifs, selon le procédé de béton projeté humide, **caractérisé en ce que**
les mélanges de béton humide contiennent 9 à 30 % en poids de ciment, 65 à 90 % en poids de charges, 0,1 à 5,0 % en poids d'un ou de plusieurs polymérisats, les données précédentes en % en poids se rapportant chacune à 100 % en poids de masse sèche des mélanges de béton humide, et 40 à 60 % en poids d'eau, par rapport à la masse totale du ciment utilisé, et
en tant que polymérisat on utilise au moins un homopolymérisat d'acétate de vinyle, un copolymérisat d'acétate de vinyle avec l'éthylène, un copolymérisat d'acétate de vinyle avec l'éthylène et un ou plusieurs autres esters vinyliques, un copolymérisat d'acétate de vinyle avec l'éthylène et des esters d'acide acrylique ou un copolymérisat d'acétate de vinyle avec l'éthylène et le chlorure de vinyle, et on introduit les mélanges de béton humide dans une machine à projeter le béton et on les applique en une épaisseur de couche des 3 cm sur un fond au moyen du procédé de béton projeté humide.

2. Procédé pour l'application de mélanges de béton humide selon la revendication 1, **caractérisé en ce que** les esters vinyliques sont choisis dans le groupe comprenant l'acétate de vinyle, le propionate de vinyle, le butyrate de vinyle, le 2-éthylhexanoate de vinyle, le laurate de vinyle, l'acétate de 1-méthylvinyle, le pivalate de vinyle et des esters vinyliques d'acides monocarboxyliques alpha-ramifiés ayant de 9 à 13 atomes de carbone.

3. Procédé pour l'application de mélanges de béton humide selon les revendications 1 à 2, **caractérisé en ce que** les polymérisats ont des températures de transition vitreuse Tg de -50 °C à +50 °C.

4. Procédé pour l'application de mélanges de béton humide selon les revendications 1 à 3, **caractérisé en ce qu'**on utilise comme un adjuvant 0,2 à 2 % en poids, par rapport à la masse totale du ciment utilisé du mélange de béton humide, de plastifiant pour béton.

5. Procédé pour l'application de mélanges de béton humide selon les revendications 1 à 4, pour la fabrication d'éléments de construction, les scellements de surfaces, la consolidation de remblais ou la stabilisation de roc ou de roches.

6. Procédé pour l'application de mélanges de béton humide selon les revendications 1 à 4, pour la construction de bâtiments, de puits, de voies d'approvisionnement, de ponts, de dalles, de tunnels ou de mines.
